# EUROPÄISCHE PATENTSCHRIFT

(11) **EP 3 256 358 B1**
(45) Veröffentlichungstag und Bekanntmachung des Hinweises auf die Patenterteilung: **22.09.2021**
(21) Anmeldenummer: 16702357.1
(22) Anmeldetag: 22.01.2016
(51) Int. Cl.: B60W 30/18, B62D 15/02, B60W 50/00

(54) **VERFAHREN UND SYSTEM ZUM DURCHFÜHREN VON AUTOMATISIERTEN FAHRMANÖVERN**
METHOD AND SYSTEM FOR PERFORMING AUTOMATED DRIVING MANOEUVERS
PROCÉDÉ ET SYSTÈME POUR EFFECTUER DES MAN UVRES DE CONDUITE AUTOMATISÉES

(30) Priorität: 10.02.2015 DE 102015202343
(43) Veröffentlichungstag der Anmeldung: 20.12.2017
(73) Patentinhaber: Robert Bosch GmbH, 70442 Stuttgart (DE)
(72) Erfinder: MARBERGER, Claus, 71263 Weil Der Stadt (DE)
(86) Internationale Anmeldenummer: PCT/EP2016/051315
(87) Internationale Veröffentlichungsnummer: WO 2016/128199

(56) Entgegenhaltungen:
- DE-A1- 10 221 835
- DE-A1-102009 039 774
- DE-A1-102009 040 677
- DE-A1-102010 002 067
- DE-A1-102011 088 768
- DE-A1-102013 210 941
- DE-A1-102014 105 408

## Beschreibung

### Stand der Technik

Die Erfindung betrifft ein Verfahren zum Durchführen von automatisierten Fahrmanövern nach dem Oberbegriff des Anspruchs 1. Ferner betrifft die Erfindung ein System zum Durchführen eines erfindungsgemäßen Verfahrens.

Ein Verfahren zum Durchführen von automatisierten Fahrmanövern nach dem Oberbegriff des Anspruchs 1 ist aus der Praxis bereits bei automatischen Einparkmanövern bekannt. Dabei fährt der Fahrer mit seinem Fahrzeug beispielsweise an einer parallel zum Straßenverlauf angeordneten Parklücke vorbei, wobei mittels Umfeldsensoren, insbesondere in Form von Ultraschallsensoren, die Parklücke hinsichtlich ihrer Länge und Tiefe vermessen wird. Anschließend kann der Fahrer über eine Eingabeeinheit einer Steuereinrichtung seinen Einparkwunsch in die zuvor vermessene Parklücke eingeben. Das Fahrzeug führt daraufhin beispielsweise während einer Rückwärtsfahrt die zum Einparken in die Parklücke erforderlichen Lenkbewegungen automatisch durch, während der Fahrer aus gesetzlichen Erfordernissen für das Beschleunigen bzw. Bremsen während des Fahrmanövers verantwortlich ist. Aus technischer Sicht ist es jedoch durchaus möglich, auch das Beschleunigen bzw. Abbremsen während des automatischen Einparkvorgangs durch die Steuereinrichtung durchführen zu lassen.

Bei dem Durchführen eines derartigen automatischen Fahrmanövers, beispielsweise des angesprochenen Einparkmanövers, wird die Steuereinrichtung den Fahrweg bzw. die Trajektorie derart auswählen, dass zu den die Parklücke begrenzenden Objekten oder Fahrzeugen ein ausreichender Sicherheitsabstand vorhanden ist. Dies bedeutet, dass unter Berücksichtigung der angesprochenen Sicherheitsabstände eine Parklücke eine bestimmte Mindestlänge aufweisen muss. Demgegenüber würde ein geübter Fahrer die Sicherheitsabstände bei einem manuellen Einparkmanöver unter Umständen geringer wählen, so dass gegenüber einem automatisierten Einparkvorgang beispielsweise eine geringere Länge der Parklücke zum Einparken des Fahrzeugs ausreichend ist. Zwar könnte man die Steuereinrichtung bei hinreichender Genauigkeit bzw. Zuverlässigkeit von Umfeldsensoren dahingehend programmieren, dass die Sicherheitsabstände ebenfalls reduziert werden, ein derartiges Einparkmanöver unter Verwendung minimaler Sicherheitsabstände ist jedoch insbesondere bei Fahrern, die derartige automatisierte Fahrmanöver relativ selten durchführen oder eine relativ geringe Erfahrung mit derartigen Fahrmanövern aufweisen, ggf. unerwünscht, da der Fahrer bei Unterschreitung bestimmter Sicherheitsabstände ggf. auf ein Versagen der Steuereinrichtung schließen würde und das automatisierte Fahrmanöver abbricht. Die aus dem Stand der Technik bekannten automatisierten Fahrmanöver stellen daher einen Kompromiss zwischen dem technisch Möglichen einerseits und der Akzeptanz der Durchführung von Fahrmanövern durch den Fahrer andererseits dar.

Aus der DE 10 2004 039 286 A1 ist es bekannt, das Aggressionsverhalten eines Fahrers anhand statistischer Auswertungen von Fahrmanövern, welche durch Sensoren erfasst und an einem Empfänger übermittelt werden, zu erfassen. Ein derartiges Verfahren ermöglicht es beispielsweise Versicherungen, ein individuelles Risiko eines Fahrers hinsichtlich des Auftretens von Schadensfällen vorauszusagen und ggf. entsprechende Prämienanpassungen vorzunehmen.

Weiterhin ist es aus der DE 10 2009 054 002 A1 bekannt, die Routenberechnung eines Navigationssystems anhand von Erfahrungswerten vorangegangener Berechnungen unter Berücksichtigung individueller Randbedingungen vorzunehmen. Dadurch soll eine optimierte Routenberechnung erzielt werden.

Aus der DE 10 2011 088 768 A1 ist ein fahrstabilitätsbezogenes Fahrerassistenzsystem mit einem Programmmodul bekannt, durch das das Fahrerassistenzsystem in einen Lernmodus zum Trainieren des Fahrkönnens des Fahrers versetzt wird. In diesem Lernmodus werden fahrdynamische Störungen induziert, auf die der Fahrer ohne helfende Fahrerassistenz-Eingriffe aktiv entsprechend reagieren muss. Hierdurch soll das Situationsbewusstsein des Fahrers erhöht werden, sodass der Fahrer im Notfall auch das nötige Können zum Eingriff besitzt. Um den Lernmodus zu starten kann der Fahrer willkürlich ein Bedienelement betätigen.

Die DE 10 2013 210 941 A1, die die Basis für die zweiteilige Anspruchsfassung darstellt, beschreibt ein Verfahren, bei dem mittels eines Überwachungssystems Fahrparameter des Fahrers gebildet werden, die den Fahrstil des Fahrers beschreiben sollen. So kann bei einer Steuerung des Fahrzeugs mittels des Fahrerassistenzsystems der Fahrstil des Fahrers zumindest teilweise abgebildet werden. Das Überwachungssystem überwacht den Fahrer mittels einer Überwachungseinrichtung bei einer Fahrsituation wie beispielsweise einer teilautomatisierten oder automatisierten Fahrt und leitet aus seinem Verhalten die Fahrparameter ab.

Aus der DE 10 2010 002 067 A1 ist ein Fahrerassistenzverfahren bekannt, welches den Fahrer eines Kraftfahrzeugs beim Halten der Fahrspur entlang einer Solltrajektorie bei einem Spurwechsel unterstützt. Hierbei kann die Spurwechseltrajektorie so durchgeführt werden, dass sie dem Fahrstil des Fahrers bei einem manuellen Spurwechsel angeglichen wird. Hierzu können Daten über die vom Fahrer ohne Unterstützung durchgeführten Fahrspurwechsel gespeichert und dann berücksichtigt werden. Beim automatischen Durchführen des Spurwechsels kann das Betätigen des Blinkers den Spurwechsel einleiten und Sensordaten der Umfeldsensorik können bei der Planung des Suprwechsels berücksichtigt werden.

### Offenbarung der Erfindung

Ausgehend von dem dargestellten Stand der Technik liegt der Erfindung die Aufgabe zugrunde, ein Verfahren zum Durchführen von automatisierten Fahrmanövern nach dem Oberbegriff des Anspruchs 1 derart weiterzubilden, dass optimierte Fahrmanöver durchführbar sind. Unter optimierten Fahrmanövern im Sinne der Erfindung werden beispielsweise Fahrmanöver verstanden, die gegenüber dem Stand der Technik bei Einparkvorgängen die Nutzung von besonders kurzen Parklücken ermöglichen. Alternativ oder zusätzlich sollen derartige optimierte Fahrmanöver auch besonders schnell durchgeführt werden können.

Diese Aufgabe wird erfindungsgemäß bei einem Verfahren zum Durchführen von automatisierten Fahrmanövern mit den kennzeichnenden Merkmalen des Anspruchs 1 gelöst.

Mit anderen Worten gesagt bedeutet dies, dass automatisierte Fahrmanöver individualisiert durchgeführt werden, um diese hinsichtlich der oben angesprochenen Kriterien zu optimieren. Die Optimierung soll dabei hinsichtlich einer Charakterisierung des Fahrers vorgenommen werden, d.h., dass die automatisierten Fahrmanöver individuell an den jeweiligen Fahrer angepasst werden.

Vorteilhafte Weiterbildungen des erfindungsgemäßen Verfahrens zum Durchführen von automatisierten Fahrmanövern sind in den Unteransprüchen aufgeführt.

In einer bevorzugten Weiterbildung des Verfahrens ist es vorgesehen, dass bei der Charakterisierung des Fahrers die Anzahl von in der Vergangenheit durchgeführten, gleichartigen automatisierten Fahrmanövern berücksichtigt wird. Konkret bedeutet dies, dass bei einer relativ hohen Anzahl von in der Vergangenheit durchgeführten, gleichartigen automatisierten Fahrmanövern, beispielsweise von automatisierten Einparkvorgängen, auf eine hohe Vertrautheit des Fahrers mit den automatisierten Fahrmanövern geschlossen wird. Diese hohe Vertrautheit hat zur Folge, dass die Steuereinrichtung beispielsweise bei einem erneuten Einparkmanöver geringere Abstände zu die Parklücke begrenzenden Objekten bzw. Fahrzeugen einhalten kann, ohne dass dadurch der Fahrer bei der Durchführung des automatisierten Fahrmanövers beunruhigt wird und dadurch eventuell das automatisierte Fahrmanöver abbricht.

Gemäß der vorliegenden Erfindung ist zudem vorgesehen, dass bei der Charakterisierung des Fahrers die Gesamtanzahl von in der Vergangenheit durchgeführten automatisierten Fahrmanövern berücksichtigt wird. Im Gegensatz zu gerade erläuterten Variante werden dabei beispielsweise nicht nur Einparkvorgänge berücksichtigt, sondern beispielsweise auch automatisierte Überhol- oder Bremsmanöver. Diese automatisierten Fahrmanöver können in unterschiedliche Gruppen eingeteilt und unterschiedlich gewichtet werden, derart, dass beispielsweise eine bestimmte Anzahl von durchgeführten automatisierten Einparkmanövern anders bewertet wird als die gleiche Anzahl von automatisierten Überholvorgängen. Auch können unterschiedliche Anzahlen von unterschiedlichen automatisierten Fahrmanövern unterschiedliche Konsequenzen haben: Hat der Fahrer beispielsweise in der Vergangenheit in überwiegender Mehrheit lediglich automatisierte Einparkmanöver durchgeführt und nur relativ selten Überholmanöver, so kann dies bei einem erneuten automatisierten Einparkmanöver eine relative starke Verringerung beispielsweise von Sicherheitsabständen zu anderen Fahrzeugen bedeuten, während Sicherheitsabstände zu anderen Fahrzeugen beim Durchführen eines automatisierten Überholvorgangs relativ groß gewählt werden.

Bei der Charakterisierung des Fahrers ist es darüber hinaus in einer weiteren Ausgestaltung des Verfahrens vorgesehen, dass der zeitliche Verlauf von in der Vergangenheit durchgeführten automatisierten Fahrmanövern berücksichtigt wird. Das bedeutet, dass beispielsweise eine relativ hohe Anzahl von in einem kurzen Zeitraum vor dem Durchführen eines automatisierten Fahrmanövers durchgeführte automatisierte Fahrmanöver eine andere Auswirkung haben als wenn die automatisierten Fahrmanöver sich entweder gleichmäßig über die Vergangenheit verteilen oder aber relativ lange zurückliegen. Während in dem zunächst genannten Fallbeispiel beispielsweise bei einem automatisierten Einparkmanöver relativ geringe Abstände zu die Parklücke begrenzenden Objekten oder Fahrzeugen von der Steuereinrichtung ausgewählt werden, werden für die beiden letztgenannten Fälle die Abstände beispielsweise vergrößert.

Darüber hinaus sieht eine weitere bevorzugte Ausgestaltung des erfindungsgemäßen Verfahrens vor, dass das Fahrmanöver zusätzlich unter Berücksichtigung von mittels der Umfeldsensoren erfassten Randbedingungen durchgeführt wird. Das bedeutet, dass beispielsweise Dunkelheit oder schlechte Sichtbedingungen, die die Funktionalität der Umfeldsensoren nicht einschränken, beispielsweise bei Einparkmanövern größere Abstände zu Objekten bzw. Fahrzeugen eingehalten werden.

Darüber hinaus kann es auch vorgesehen sein, dass die Charakterisierung des Fahrers aufgrund dessen Geschlecht, Alter und Fahrerfahrung erfolgt, wobei der Fahrer diese Angaben über eine weitere Eingabeeinheit an die Steuereinrichtung als Eingangsgrößen eingibt. Hintergrund für diese Ausgestaltung der Erfindung ist es, dass beispielsweise davon ausgegangen wird, dass Fahrer mit hoher Fahrerfahrung tendenziell weniger ängstlich sind, d.h. beispielsweise tendenziell eher geringere Abstände beim Einparken in eine Parklücke akzeptieren als beispielsweise Fahrer mit relativ geringer Fahrerfahrung.

Das erfindungsgemäße Verfahren findet bevorzugt Verwendung bei automatisierten Einparkvorgängen. Bei derartigen Einparkvorgängen kann durch die Charakterisierung bzw. Eingruppierung des Fahrers ermöglicht werden, besonders kurze Parklücken zum Einparken auszuwählen und/oder den Einparkvorgang zeitlich besonders kurz zu halten.

In konkreter Ausgestaltung eines automatisierten Einparkvorgangs ist es vorgesehen, dass in Abhängigkeit von der Charakterisierung des Fahrers der Abstand zu eine Parkfläche begrenzenden Fahrzeugen oder Objekten und/oder eine Vorbeifahrgeschwindigkeit an den Fahrzeugen oder Objekten ausgewählt werden.

Es ist jedoch auch denkbar, das soweit beschriebene erfindungsgemäße Verfahren bei Überhol- oder Bremsvorgängen durchzuführen. Beispielsweise wird bei einer entsprechenden Charakterisierung des Fahrers als erfahrener Fahrer ein Bremsvorgang später eingeleitet als bei einer Charakterisierung des Fahrers als wenig erfahrener Fahrer. Ein derartiges automatisiertes Bremsmanöver ermöglicht es daher beispielsweise, den Verkehrsfluss im Kolonnenverkehr zu optimieren, da an sich nicht erforderliche bzw. zu frühe Bremsmanöver vermieden werden.

Die Erfindung umfasst auch ein System zum Durchführen des erfindungsgemäßen Verfahrens nach Anspruch 9.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: eine vereinfachte Darstellung eines Fahrzeugs bei der Durchführung eines automatisierten Einparkmanövers und
- Fig. 2 und Fig. 3: Diagramme zur Erläuterung des erfindungsgemäßen Verfahrens zum Durchführen von automatisierten Fahrmanövern.

Gleiche Elemente bzw. Elemente mit gleicher Funktion sind in den Figuren mit den gleichen Bezugsziffern versehen.

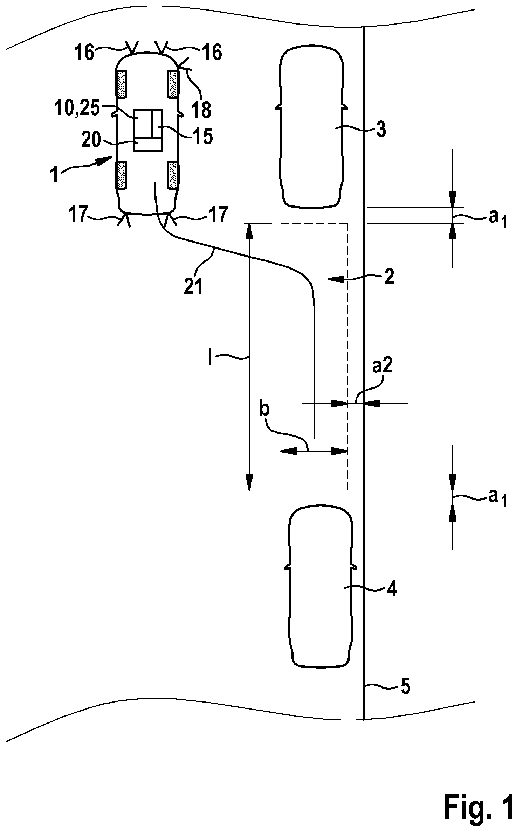

In der Fig. 1 ist in vereinfachter Draufsicht ein Fahrzeug 1 während der Durchführung eines automatisierten Einparkvorgangs in eine Parklücke 2 dargestellt. Die beispielhaft eine rechteckförmige Grundfläche aufweisende Parklücke 2 weist zu einem ersten Fahrzeug 3 und einem zweiten Fahrzeug 4, die die Parklücke 2 in Längsrichtung begrenzen, jeweils einen Abstand a₁ auf. Ferner weist die Parklücke 2 einen Abstand a₂ zu einer seitlichen Straßenbegrenzung, beispielsweise einem Bordstein 5, auf.

Das Fahrzeug 1 weist zum Durchführen des automatisierten Fahrmanövers eine Steuereinrichtung 10 auf, die dazu ausgebildet ist, durch Kopplung mit Antriebs- und/oder Lenkmitteln des Fahrzeugs 1 (nicht gezeigt) das Fahrzeug 1 vollautomatisch in die Parklücke 2 einzuparken. Dazu ist die Steuereinrichtung 10 mit einem Umfelderkennungssystem 15 gekoppelt, das beispielhaft, und nicht einschränkend, zwei im Bereich des vorderen Stoßfängers des Fahrzeugs 1 angeordnete Abstandssensoren 16, zwei, im Bereich des hinteren Stoßfängers des Fahrzeugs 1 angeordnete Abstandssensoren 17, sowie einen, im Bereich der rechten Seite im Bereich der Fahrzeugfront angeordneten, in Richtung zur Parklücke 2 gerichteten Abstandssensor 18 umfasst.

Während die Abstandssensoren 16 und 17 dazu dienen, Abstände des Fahrzeugs 1 zu vor bzw. hinter dem Fahrzeug 1 befindlichen Objekten bzw. den Fahrzeugen 3 und 4 zu detektieren, dient der Abstandssensor 18 dazu, beim Vorbeifahren des Fahrzeugs 1 an der Parklücke 2 die Länge I und die Breite b der Parklücke 2 unter Berücksichtigung der Abstände a₁ und a₂ bzw. des Bordsteins 5 zu erfassen. Aufgrund der erfassten Länge I der Parklücke 2 kann die Steuereinrichtung 10 des Fahrzeugs 1 prüfen, ob die Länge I der Parklücke 2 ausreichend ist, um einen automatisierten Einparkvorgang des Fahrzeugs 1 durchzuführen.

Der Wunsch zur Durchführung eines automatisierten Einparkvorgangs wird durch den Fahrer beispielhaft über eine Eingabeeinheit 20, welche in Wirkverbindung mit der Steuereinrichtung 10 angeordnet ist, eingegeben. Für den Fall, dass die Länge I der Parklücke 2 ausreichend ist, wird von der Steuereinrichtung 10 eine Fahrstrecke 21 bzw. Trajektorie berechnet, um den automatischen Einparkvorgang durchzuführen. Die Fahrstrecke 21 berücksichtigt dabei insbesondere bestimmte, auch seitliche Abstände zu den die Parklücke 2 begrenzenden Fahrzeugen 3, 4 sowie dem Bordstein 5. Darüber hinaus wird für den Fall, dass nicht nur Lenkbewegungen, sondern auch Beschleunigungen bzw. Verzögerungen des Fahrzeugs 1 während des Einparkvorgangs durch die Steuereinrichtung 10 zumindest mittelbar eingeleitet werden, entsprechende Beschleunigungs- bzw. Verzögerungswerte als Sollwerte von der Steuereinrichtung 10 an die Antriebs- bzw. Bremsmittel des Fahrzeugs 1 übermittelt bzw. vorgegeben.

Um eine Individualisierung eines soweit beispielhaft als Einparkvorgang automatisierten Fahrmanövers in Abhängigkeit des Fahrers des Fahrzeugs 1 zu ermöglichen, ist die Steuereinrichtung 10 erfindungsgemäß besonders ausgestattet. Insbesondere weist die Steuereinrichtung 10 zumindest mittelbar einen Algorithmus 25 auf, der dazu dient, eine Charakterisierung des Fahrers des Fahrzeugs 1 vorzunehmen.

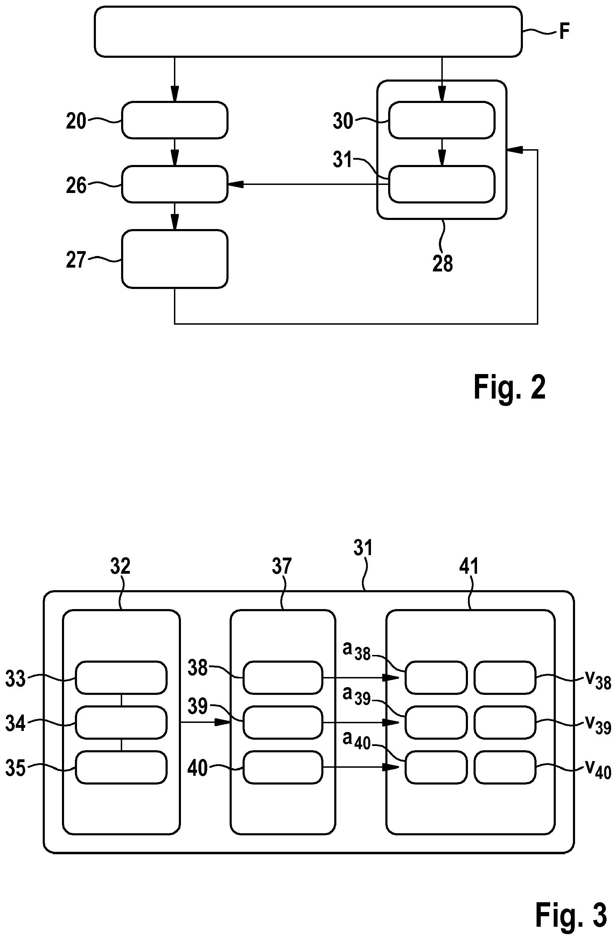

Hierzu wird zunächst auf die Darstellung der Fig. 2 verwiesen. Dabei gibt der Fahrer F des Fahrzeugs 1 über die Eingabeeinheit 20 ein gewünschtes automatisiertes Fahrmanöver, beispielsweise einen Einparkvorgang oder eine Geschwindigkeit während einer Kolonnenfahrt, als Sollvorgabe vor. Die über die Eingabeeinheit 20 mitgeteilte Sollvorgabe bzw. der Fahrerwunsch führt zu dem Block 26, der eine Verhaltensplanung und Verhaltensauswahl darstellt und zu einem Systemverhalten der Steuereinrichtung 10 im Block 27 führt. Der Block 27 kennzeichnet die Parameter der Durchführung des konkreten Fahrmanövers durch die Steuereinrichtung 10. Die Parameter dieses Fahrmanövers werden einem Block 28, welcher ein Nutzermodell darstellt, zusätzlich als Eingangsgröße zugeführt. Das Nutzermodell im Block 28 weist eine zusätzliche Eingabeeinheit 30 zur Nutzeridentifikation auf, über das der Fahrer F beispielhaft, und nicht einschränkend, sein Alter, sein Geschlecht und seine Fahrerfahrung als Eingangsgrößen eingeben kann. Die Nutzeridentifikation im Block 30 wird als Eingangsgröße eines Blocks 31 verwendet, der dazu dient, die eigentliche Charakterisierung des Fahrers F abzubilden, welche wiederum als Eingangsgröße für den Block 26 dient. Wesentlich ist auch, dass die zusätzliche Eingabeeinheit 30 zur Nutzeridentifikation lediglich optional vorgesehen ist, um die Nutzeridentifikation zu vereinfachen oder zu beschleunigen. Das Nutzermodell im Block 28 ist jedoch grundsätzlich so ausgelegt, aufgrund von gelernten Erfahrungswerten auf den Nutzer bzw. Fahrer F geschlossen werden kann.

Entsprechend der Darstellung der Fig. 3 umfasst der Block 31 des Systemvertrauens einen ersten Block 32, welcher beispielhaft das bisherige Nutzungsverhalten des Fahrers F abbildet. Der Block 32 umfasst beispielhaft und nicht einschränkend eine Vielzahl von abgespeicherten Daten oder Datensätzen 33 bis 35, wie beispielsweise die Gesamtanzahl von in der Vergangenheit durchgeführten automatisierten Fahrmanövern, den zeitlichen Verlauf der in der Vergangenheit durchgeführten Fahrmanöver sowie deren Art und ggf. weitere Kriterien. Mittels des angesprochenen Algorithmus 25 werden im Block 37 aus den Datensätzen 33 bis 35 zunächst Vertrauensindizes 38 bis 40 gebildet bzw. gebildet, welche in dem Block 41 anschließend beispielhaft und nicht einschränkend, zur Generierung unterschiedlicher Parameter wie Abstände a₃₈ bis a₄₀ und Geschwindigkeiten v₃₈ bis v₄₀ beim Durchführen der automatisierten Fahrmanöver führt. Die im Block 41 generierten Parameter werden bei der Durchführung des automatisierten Fahrmanövers aufgrund des Fahrerwunsches im Block 26 als Eingangsgröße berücksichtigt.

## Patentansprüche

1. Verfahren zum Durchführen von automatisierten Fahrmanövern, bei dem ein Fahrer (F) mittels einer Eingabeeinheit (20) ein gewünschtes automatisiertes Fahrmanöver vorgibt und eine Steuereinrichtung (10) des Fahrzeugs (1) das besagte Fahrmanöver unter Nutzung von Umfeldsensoren (16 bis 18) und einer Kopplung der Steuereinrichtung (10) mit Antriebs- und/oder Lenkmitteln des Fahrzeugs (1) durchführt, wobei zumindest eine Fahrstrecke (21) des besagten Fahrmanövers und/oder die Geschwindigkeit (v) während des besagten Fahrmanövers und/oder Beschleunigungs- oder Bremsmanöver während des besagten Fahrmanövers von der Steuereinrichtung (10) in Abhängigkeit einer Charakterisierung (31) des Fahrers (F) ausgewählt werden/wird,
**dadurch gekennzeichnet,**
**dass** bei der Charakterisierung (31) des Fahrers (F) die Gesamtanzahl von in der Vergangenheit durchgeführten automatisierten Fahrmanövern berücksichtigt wird.

2. Verfahren nach Anspruch 1,
**dadurch gekennzeichnet,**
**dass** bei der Charakterisierung (31) des Fahrers (F) die Anzahl von in der Vergangenheit durchgeführten gleichartigen automatisierten Fahrmanövern berücksichtigt wird.

3. Verfahren nach einem der Ansprüche 1 bis 2,
**dadurch gekennzeichnet,**
**dass** bei der Charakterisierung (31) des Fahrers (F) der zeitliche Verlauf von in der Vergangenheit durchgeführten automatisierten Fahrmanövern berücksichtigt wird.

4. Verfahren nach einem der Ansprüche 1 bis 3,
**dadurch gekennzeichnet,**
**dass** das besagte
Fahrmanöver zusätzlich unter Berücksichtigung von mittels der Umfeldsensoren (16 bis 18) erfassten Randbedingungen ausgewählt wird.

5. Verfahren nach einem der Ansprüche 1 bis 4,
**dadurch gekennzeichnet,**
**dass** bei der Charakterisierung (31) des Fahrers (F) dessen Geschlecht, Alter und Fahrerfahrung berücksichtigt wird, die der Fahrer (F) über eine weitere Eingabeeinheit (30) an die Steuereinrichtung (10) zumindest mittelbar als Eingangsgrößen eingibt.

6. Verfahren nach einem der Ansprüche 1 bis 5,
**dadurch gekennzeichnet,**
**dass** das automatisierte Fahrmanöver ein Einparkvorgang ist.

7. Verfahren nach Anspruch 6,
**dadurch gekennzeichnet,**
**dass** in Abhängigkeit von der Charakterisierung (31) des Fahrers (F) der Abstand (a) zu eine Parkfläche (2) begrenzenden Fahrzeugen (3, 4) oder Objekten (5) und/oder eine Vorbeifahrgeschwindigkeit an den Fahrzeugen (3, 4) oder Objekten (5) ausgewählt werden.

8. Verfahren nach einem der Ansprüche 1 bis 5,
**dadurch gekennzeichnet,**
**dass** das automatisierte Fahrmanöver ein Überhol- oder Bremsvorgang ist.

9. System zum Durchführen des Verfahrens nach einem der Ansprüche 1 bis 8, mit wenigstens einer Eingabeeinheit (20, 30) ausgebildet zum Eingeben eines Fahrmanöverwunsches eines Fahrers und ggf. individueller Eigenschaften des Fahrers (F), mit Umfeldsensoren (16 bis 18) und mit einer Steuereinrichtung (10) ausgebildet zum Durchführen des von dem Fahrer gewünschten automatisierten Fahrmanövers unter Nutzung von Antriebs- und/oder Lenkmitteln des Fahrzeugs (1), wobei die Steuereinrichtung (10) zumindest mittels eines Algorithmus (25) dazu ausgebildet ist, eine Fahrstrecke (21) des besagten Fahrmanövers und/oder die Geschwindigkeit (v) des besagten Fahrmanövers und/oder Beschleunigungs- oder Bremsmanöver und/oder Abstände (a) des besagten Fahrmanövers in Abhängigkeit einer Charakterisierung (31) des Fahrers (F) durchzuführen,
**dadurch gekennzeichnet,**
**dass** die Steuereinrichtung (10) zudem ausgebildet ist, bei der Charakterisierung (31) des Fahrers (F) die Gesamtanzahl von in der Vergangenheit durchgeführten automatisierten Fahrmanövern zu berücksichtigen.

## Claims

1. Method for performing automated driving manoeuvres, in which method a driver (F) specifies a desired automated driving manoeuvre by means of an input unit (20), and a control device (10) of the vehicle (1) performs the said driving manoeuvre while using driving environment sensors (16 to 18) and a coupling of the control device (10) to driving and/or steering means of the vehicle (1),
wherein
at least one driving path (21) of the said driving manoeuvre and/or the speed (v) during the said driving manoeuvre and/or acceleration or braking manoeuvre during the said driving manoeuvre are/is selected by the control device (10) in dependence on a characterization (31) of the driver (F),
**characterized**
**in that** in the characterization (31) of the driver (F) the total number of automated driving manoeuvres performed in the past is taken into account.

2. Method according to Claim 1,
**characterized**
**in that**
in the characterization (31) of the driver (F) the number of similar automated driving manoeuvres performed in the past is taken into account.

3. Method according to either of Claims 1 and 2,
**characterized**
**in that** in the characterization (31) of the driver (F) the progression over time of automated driving manoeuvres performed in the past is taken into account.

4. Method according to one of Claims 1 to 3,
**characterized**
**in that** the said driving manoeuvre is additionally selected while taking into account boundary conditions detected by means of the driving environment sensors (16 to 18).

5. Method according to one of Claims 1 to 4,
**characterized**
**in that** in the characterization (31) of the driver (F) his or her gender, age and driving experience are taken into account, input by the driver (F) to the control device (10) at least indirectly as input variables by way of a further input unit (30).

6. Method according to one of Claims 1 to 5,
**characterized**
**in that** the automated driving manoeuvre is a parking operation.

7. Method according to Claim 6,
**characterized**
**in that** the distance (a) from vehicles (3, 4) or objects (5) delimiting a parking space (2) and/or a speed for passing the vehicles (3, 4) or objects (5) is selected in dependence on the characterization (31) of the driver (F) .

8. Method according to one of Claims 1 to 5,
**characterized**
**in that** the automated driving manoeuvre is an overtaking or braking operation.

9. System for performing the method according to one of Claims 1 to 8, with at least one input unit (20, 30) designed for inputting a driving manoeuvre request of a driver and possibly individual characteristics of the driver (F),
with driving environment sensors (16 to 18) and with a control device (10) designed for performing the automated driving manoeuvre desired by the driver by using driving and/or steering means of the vehicle (1),
wherein
the control device (10) is designed to perform at least by means of an algorithm (25) a driving path (21) of the said driving manoeuvre and/or the speed (v) of the said driving manoeuvre and/or acceleration or braking manoeuvre and/or distances (a) of the said driving manoeuvre in dependence on a characterization (31) of the driver (F),
**characterized**
**in that** the control device (10) is also designed to take into account in the characterization (31) of the driver (F) the total number of automated driving manoeuvres performed in the past.

## Revendications

1. Procédé permettant d'effectuer des manœuvres de conduite automatisées, dans lequel un conducteur (F) spécifie au moyen d'une unité d'entrée (20) une manœuvre de conduite automatisée souhaitée, et un dispositif de commande (10) du véhicule (1) exécute ladite manœuvre de conduite en utilisant des capteurs d'environnement (16 à 18) et un accouplement du dispositif de commande (10) avec des moyens d'entraînement et/ou de direction du véhicule (1),
dans lequel au moins un trajet de conduite (21) de ladite manœuvre de conduite et/ou la vitesse (v) pendant ladite manœuvre de conduite et/ou une manœuvre d'accélération ou de freinage pendant ladite manœuvre de conduite sont sélectionnés par le dispositif de commande (10) en fonction d'une caractérisation (31) du conducteur (F),
**caractérisé en ce que** lors de la caractérisation (31) du conducteur (F), le nombre total des manœuvres de conduite automatisées exécutées par le passé est pris en compte.

2. Procédé selon la revendication 1, **caractérisé en ce que** lors de la caractérisation (31) du conducteur (F), le nombre des manœuvres de conduite automatisées de même type exécutées par le passé est pris en compte.

3. Procédé selon l'une quelconque des revendications 1 à 2, **caractérisé en ce que** lors de la caractérisation (31) du conducteur (F), le déroulement chronologique de manœuvres de conduite automatisées exécutées par le passé est pris en compte.

4. Procédé selon l'une quelconque des revendications 1 à 3, **caractérisé en ce que** ladite manœuvre de conduite est en outre sélectionnée en tenant compte de conditions marginales détectées au moyen des capteurs d'environnement (16 à 18).

5. Procédé selon l'une quelconque des revendications 1 à 4, **caractérisé en ce que** lors de la caractérisation (31) du conducteur (F), son genre, son âge et son expérience de conduite sont pris en compte que le conducteur (F) entre par l'intermédiaire d'une autre unité d'entrée (30) à destination du dispositif de commande (10) au moins indirectement comme des grandeurs d'entrée.

6. Procédé selon l'une quelconque des revendications 1 à 5, **caractérisé en ce que** la manœuvre de conduite automatisée est un processus de stationnement.

7. Procédé selon la revendication 6, **caractérisé en ce qu'**en fonction de la caractérisation (31) du conducteur (F), la distance (a) par rapport à des véhicules (3, 4) ou des objets (5) délimitant une surface de stationnement (2) et/ou une vitesse de passage devant les véhicules (3, 4) ou les objets (5) est/sont sélectionnée(s).

8. Procédé selon l'une quelconque des revendications 1 à 5, **caractérisé en ce que** la manœuvre de conduite automatisée est un processus de dépassement ou de freinage.

9. Système permettant d'exécuter le procédé selon l'une quelconque des revendications 1 à 8, comprenant au moins une unité d'entrée (20, 30) qui est réalisée pour entrer un souhait de manœuvre de conduite d'un conducteur et éventuellement des propriétés individuelles du conducteur (F), comprenant des capteurs d'environnement (16 à 18) et un dispositif de commande (10) qui est réalisé pour exécuter la manœuvre de conduite automatisée souhaitée par le conducteur en utilisant des moyens d'entraînement et/ou de direction du véhicule (1),
dans lequel le dispositif de commande (10) est réalisé au moins au moyen d'un algorithme (25) pour effectuer un trajet de conduite (21) de ladite manœuvre de conduite et/ou la vitesse (v) de ladite manœuvre de conduite et/ou des manœuvres d'accélération ou de freinage et/ou des distances (a) de ladite manœuvre de conduite en fonction d'une caractérisation (31) du conducteur (F),
**caractérisé en ce que** le dispositif de commande (10) est en outre réalisé pour prendre en compte lors de la caractérisation (31) du conducteur (F) le nombre total des manœuvres de conduite automatisées effectuées par le passé.
